# EUROPEAN PATENT SPECIFICATION

(11) **EP 2 481 975 B1**
(45) Date of publication and mention of the grant of the patent: **02.07.2014**
(21) Application number: 11152615.8
(22) Date of filing: 28.01.2011
(51) Int. Cl.: E04H 17/00, F21S 9/03, F21V 33/00, F21W 131/109, F21Y 101/02, H01L 31/042

(54) **Fence post cap structure**
Zaunpfostenkappenstruktur
Structure de bouchon de piquet de clôture

(43) Date of publication of application: 01.08.2012
(73) Proprietor: Kösedag Tel Örme Sanayi Ve Ticaret Ithalat Ihracat A.S., 34940 Istanbul (TR)
(72) Inventor: Kösedag, Ali, 34390, Istanbul (TR)
(74) Representative: Sevinç, Erkan

(56) References cited:
- DE-U1- 8 811 034
- FR-A1- 2 922 628
- US-A- 6 082 877
- US-A1- 2005 247 920
- US-A1- 2008 080 174
- US-B1- 7 461 942

## Description

### Technical Field of the Invention

The present invention relates to a fence post cap adapted to be mounted on fence posts erected around an area, e.g. a residential area. In particular, the present invention relates to a fence post cap having solar energy storage means.

### Background of the Invention

A plurality of patents/patent applications are present in the field in relation to fence posts and to their configuration with regards to fixing of posts and/or fences and fittings thereof.

The present invention on the other hand provides a fence post cap which can easily be adapted to an existing fence post to let it function as an illuminating post. The cap has a solar panel associated with a battery to store solar energy. The concept of use of solar energy in fence posts for illumination purposes is known for example from the publication US 2008080174.

The advantage of the system according to the present invention lies in that the proposed fence post cap can easily be adapted to be used with existing posts without modification. To this end, said post cap imparts an improved performance to existing posts such that they are equipped with solar panels and illuminating means.

The present invention features a compact fence cap having a solar panel embedded within the cap such that and said cap can easily applied to an existing fence post without additional structural modification.

DE8811034 U1 discloses a post for outdoor use and having a lighting means which is powered by a solar panel. The lighting means and the solar panel are located in a glass bead, which consists of a lower glass hemisphere and an upper glass hemisphere. Both hemispheres are connected together by means of a circumferential seal and support ring.

US6082877 discloses a composite lighting fixture, comprising an elongated base member positionable on a surface, such as a table. The fixture further comprises a support member and a substantially translucent base cone positioned on the support member. An interchangeable decorative cone is positionable on the base cone and a finial member is positionable on a peak of the base cone, the finial member is removable therefrom to be interchanged with other finial members.

FR2922628 A1 discloses a lamp having a pole fixed in ground, and a lantern fixed to a free end of the pole and comprising a lighting device. A power supply block is provided for supplying electrical power to the lighting device. The block has an electrical accumulation circuit provided for charging an electrical accumulation battery from the electrical power provided by an assembly of photovoltaic cells and a wind turbine. The assembly of photovoltaic cells and the wind turbine are arranged above the lantern.

### Objects of the Invention

One of the objects of the present invention is to provide a fence post cap which incorporates a solar panel in association with a battery to provide an illumination effect.

Another object of the present invention is to provide a fence post cap adaptable to existing fence posts without structural modification.

Another object of the present invention is to provide a fence post cap where an improved performance is imparted to existing posts such that they are equipped with solar panels and illuminating means.

Another object of the present invention is to provide a fence post cap where a more efficient use of power accumulated by the solar panel within said cap is achieved.

### Summary of the Invention

The present invention provides a fence cap suitable for mounting on a hollow tubular post body having longitudinal channels extending so as to define and delimit a longitudinal space.

The tubular post with one or more longitudinal channels serves to the purpose of accommodating lighting means. Said lighting means are powered by a solar panel within said cap. Further, an electrical battery is provided in association with said solar panel. Said battery may conveniently be provided within the hollow tubular post body under said cap.

Further, the lighting means powered by a solar panel through an electrical battery according to the present invention are driven by means of an electronic circuit such that the lighting means are powered discontinuously but with a duty cycle to prevent flickering.

### Brief Description of the Figures

Accompanying drawings are given solely for the purpose of exemplifying a fence post cap, whose advantages over prior art were outlined above;
Fig. 1 demonstrates an exploded perspective view of a fence post cap according to the present invention.
Fig. 2a to 2f demonstrate perspective views of different fence posts the cap according to the present invention is suitable for mounting.

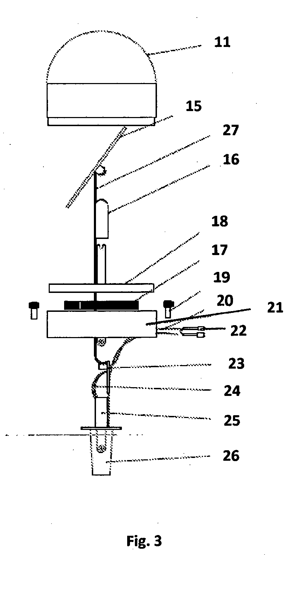

Fig. 3 demonstrates a planar view of a fence post cap components according to the present invention.

### Detailed Description of the Invention

Referring now to the figures outlined above, the present invention provides a fence post (13) cap (11) under which a solar panel (15) is disposed.

A cap (11) for a fence post whose internal cavity is shaped and dimensioned to receive the top of said post (13) typically serves to the purpose of supporting and keeping the post (13) integral in erected form.

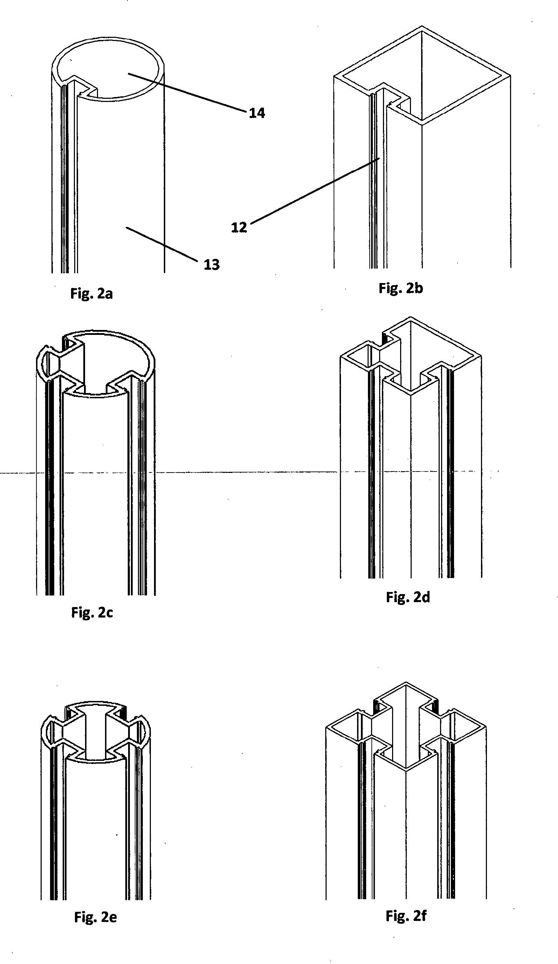

As seen in Fig. 2, the cap (11) according to the present invention can be adapted to be mounted on a plurality of fence posts (13) having different cross-sections. Said posts (13) may have a longitudinal channel to accommodate lighting means (22) for illumination purposes.

The lighting means (22) are preferably provided on both the front and the rear side of a fence post (13). The lighting means (22) are preferably LEDs (light emitting diodes) consuming relatively low energy compared to conventional lighting means.

The present invention further provides that more efficient power consumption is achieved by making use of LED elements powered on and off appropriately in order for saving power. This arrangement can be realized by means of a PWM module driving the LED elements with a duty cycle other than 1 and preferably less than 0,5 at a frequency of at least 70 Hz. It is to be noted that this arrangement both ensures reduced power consumption and provides that no flickering occurs. As is known to the skilled worker, flicker means a rapid and repeated change over time in the brightness of light. Flickering threshold is the level at which flicker is perceivable by a human viewer.

LED-driver circuits can be dimmed by applying a variable duty cycle (pulse-width modulation, or PWM) to the LED. Applying PWM current to the LED yields an average power comparable to that of dc control. PWM control can be implemented with a simple circuit consisting of a dual comparator producing a desired frequency PWM signal and a duty cycle adjustable from 0% to 100%.

The comparator's first side can be configured as an oscillator producing a triangular waveform and the other side comparing the triangle waveform with the dc control signal and generates a PWM signal. PWM signal generation and duty cycle control is widely practiced in the art and is extensively known to the person in the art.

Said cap (11) is suitable for mounting on a fence post (13) with longitudinal channels (12) located at a peripheral region of said posts (13) to define and delimit a space extending longitudinally at least partially along the longitudinal length of said posts (13).

Said posts' (13) cross-section being in different forms as seen in Fig. 2, it is not necessary to use these forms and various other shapes in cross section (e.g. ellipse, circular-like triangle, square, pentagonal, hexagonal or other polygonal shapes) may be utilized for providing a fence post (13).

The electrical battery (25) according to the invention with the associated electronic circuit (23) can be located within the post (13) enclosing a longitudinally extending hollow space (14).

The cap (11) according to the present invention ensures securing of main components of the post (13), as explained below.

One or more longitudinal channels (12) on said posts (13) receive lighting means (22), the latter being powered by a solar panel (15) according to the invention.

The present invention provides a compact solar energy station such that said lighting means are powered by a solar panel (15), said solar panel (15) being in electrical communication with a rechargeable electrical battery (25) within said longitudinally extending hollow space (14) of said posts (13). This compact arrangement ensures that no structural modification is made to the post (13) for allowing use of solar energy. To this end, said electrical battery (25) can be secured to said cap (11) within said hollow space (14) through appropriate fixing means as explained below.

Said lighting means may also be powered by other means such as non-embedded power supplies and mains supply.

The cap (11) according to the present invention is produced of transparent material in order to obtain solar rays on said solar panel (15). The cap's (11) geometrical form is similar to a dome form for focusing solar rays onto said solar panel (15) surface. Said dome-form cap (11) may integrate further optical elements optimizing and assisting in solar energy accumulation.

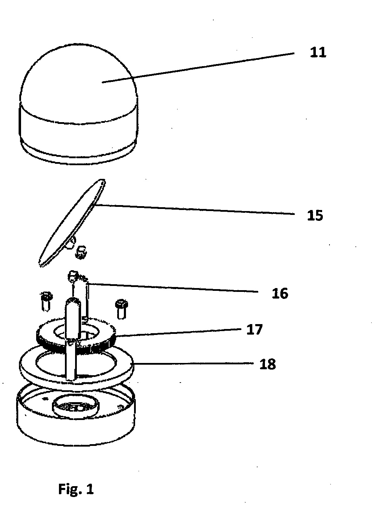

Fig. 1 according to the present invention demonstrates the main components of the fence post (13) cap (11) where said solar panel (15) is attached by a pair of legs (16) to a first gear (17) rotatable within a second gear (18) to adjust the position of said solar panel (15). Said solar panel (15) is then rotatable around its center by said legs (16) which displace peripherally in said second gear (18).

A lower body (21) of the cap (11) can be fixed by appropriate fixing means (19) such that said solar panel (15) together with said first and second gears (17, 18) are kept in integrity within said cap (11). A series of conductors (20) leading to said lighting means (22) and another series of conductors (24) establishing battery (25) and electronic circuit (23) connection are provided accordingly. Said solar panel (15) is electrically connected to the battery (25) by a conductor (27).

Further a lower cover (26) is employed to receive said battery (25). Said lower cover (26) according to the present invention is specially manufactured so as to be corresponding to the fence post (13) cross-section. Said lower cover (26) is fixed to said lower body (21).

## Claims

1. A cap (11) mounted on top of a fence post (13), said fence post (13) having a longitudinal channel (12) located at a peripheral region of said post (13) for accommodating lighting means (22), said cap (11) having an internal cavity shaped to receive the top of said post (13) and enclosing a solar panel (15) accumulating electrical energy in a rechargeable electrical battery (25) in electrical communication therewith, said solar panel (15) being inclined with respect to the longitudinal axis of said post (13) and being rotatable around said longitudinal axis, said lighting means (22) being driven by an electronic circuit (23) **characterized in that** said solar panel (15) is attached to a first gear (17) rotatable within a second gear (18) to adjust the position of said solar panel (15).

2. A cap (11) mounted on top of a fence post (13) as set forth in Claim 1 wherein said electronic circuit (23) comprises a PWM module such that said lighting means are driven with a duty cycle other than 1 and at a frequency of 70 Hz.

3. A cap (11) mounted on top of a fence post (13) as set forth in Claim 2 wherein the duty cycle in said electronic circuit is 0,5.

4. A cap (11) mounted on top of a fence post (13) as set forth in Claim 1 wherein said solar panel (15) is attached to said first gear (17) by a pair of legs (16).

## Patentansprüche

1. Abdeckung (11), die an einem Kopfende eines Zaunpfostens (13) befestigt ist, wobei der Zaunpfosten eine Längsnut (12) aufweist, die an einem Umfangsbereich des Pfostens (13) angeordnet ist, um Beleuchtungsmittel (22) aufzunehmen, wobei die Abdeckung (11) einen zum Aufnehmen des Kopfendes des Pfostens (13) geformten Innenhohlraum aufweist und ein Solarpanel (15) umschließt, das elektrische Energie in einer mit diesem in elektrischer Verbindung stehenden, wiederaufladbaren elektrischen Batterie (25) speichert, wobei das Solarpanel (15) relativ zur Längsachse des Pfostens geneigt und um die Längsachse drehbar ist, wobei die Beleuchtungsmittel (22) von einem elektronischen Schaltkreis (23) betrieben sind, **dadurch gekennzeichnet, dass** das Solarpanel (15) an einem ersten Getriebe (17) drehbar innerhalb eines zweiten Getriebes (18) angebracht ist, um die Position des Solarpanels (15) einzustellen.

2. Abdeckung (11), die einem Kopfende eines Zaunpfostens (13) befestigt ist, nach Anspruch 1, wobei der elektronische Schaltkreis (23) ein PWM-Modul derart aufweist, dass die Beleuchtungsmittel mit einem Tastverhältnis unterschiedlich von 1 und einer Frequenz von 70 Hz betrieben sind.

3. Abdeckung (11), die an einem Kopfende eines Zaunpfostens (13) befestigt ist, nach Anspruch 2, wobei das Tastverhältnis in dem elektronischen Schaltkreis 0,5 beträgt.

4. Abdeckung (11), die an einem Kopfende eines Zaunpfostens (13) befestigt ist, nach Anspruch 1, wobei das Solarpanel (15) an dem ersten Getriebe (17) mittels einem Paar Beine (16) angebracht ist.

## Revendications

1. Embout (11) monté au sommet d'un poteau de clôture (13), ledit poteau de clôture (13) ayant un canal longitudinal (12) situé au niveau d'une zone périphérique dudit poteau (13) afin de contenir un moyen d'éclairage (22), ledit embout (11) ayant une cavité interne formée afin de recevoir le haut dudit poteau (13) et contenant un panneau solaire (15) qui accumule l'énergie électrique dans une batterie électrique rechargeable (25) en communication électrique avec celui-ci, ledit panneau solaire (15) étant incliné par rapport à l'axe longitudinal dudit poteau (13) et pouvant tourner autour dudit axe longitudinal, ledit moyen d'éclairage (22) étant entraîné par un circuit électronique (23), **caractérisé en ce que** ledit panneau solaire (15) est relié à un premier engrenage (17) capable de tourner dans un second engrenage (18) afin de régler la position dudit panneau solaire (15).

2. Embout (11) monté au sommet d'un poteau de clôture (13) selon la revendication 1, dans lequel ledit circuit électronique (23) comprend un module PWM de sorte que ledit moyen d'éclairage soit entraîné avec un cycle de service différent de 1, et à une fréquence de 70 Hz.

3. Embout (11) monté au sommet d'un poteau de clôture (13) selon la revendication 2, dans lequel le cycle de service dans ledit circuit électronique est de 0,5.

4. Embout (11) monté au sommet d'un poteau de clôture (13) selon la revendication 1, dans lequel ledit panneau solaire (15) est relié audit premier engrenage (17) par une paire de pattes (16).
